# EUROPEAN PATENT APPLICATION

(11) **EP 3 575 063 A1**
(43) Date of publication of application: **04.12.2019**
(21) Application number: 18208774.2
(22) Date of filing: 28.11.2018
(51) Int. Cl.: B29C 64/129, B29C 64/264, B33Y 10/00, B33Y 40/00, B29C 35/08, B29C 71/04

(54) **THREE-DIMENSIONAL PRINTING METHOD**

(30) Priority: 28.05.2018 CN 201810522912
(71) Applicant: XYZprinting, Inc., New Taipei City 22201 (TW); Kinpo Electronics, Inc., New Taipei City 22201 (TW)
(72) Inventor: JAU, Wei-Chun, 22201 New Taipei City (TW); KUO, Tsung-Hua, 22201 New Taipei City (TW); DING, Ming-Hsiung, 22201 New Taipei City (TW)
(74) Representative: Emde, Eric

(57) **Abstract**

A 3D printing method including: obtaining a wavelength-absorptivity relationship of a liquid forming material (R1), where the wavelength-absorptivity relationship includes absorptivity peaks (P1, P2, P3) of at least two corresponding wavelengths; forming a 3D object by using a 3D printing apparatus (100), where the 3D printing apparatus provides a first light (L1) to cure the liquid forming material layer-by-layer and stacks the same to form the 3D object, and a wavelength of the first light is one of the at least two corresponding wavelengths; and providing a second light by a post curing device (200) to irradiate the 3D object, where the second light (L2) comprises the at least two corresponding wavelengths.

## Description

### BACKGROUND

### Technical Field

The disclosure relates to a three-dimensional (3D) printing method.

### Description of Related Art

Along with rapid development of technology, different methods for constructing three-dimensional (3D) models by using additive manufacturing technology such as layer-by-layer model constructing, etc. have been developed. Generally, the additive manufacturing technology is to convert design data of a 3D model constructed by software of computer aided design (CAD), etc. into a plurality of continuously stacked thin (quasi two-dimensional (2D)) cross-section layers.

Many methods for forming a plurality of the thin cross-section layers have been developed. For example, photopolymer is used as a liquid forming material used by a 3D printing apparatus, and by configuring a moving platform in the liquid forming material, and driving a light source to move along X-Y coordinates according to X-Y-Z coordinates constructed based on the design data of the 3D model to irradiate the liquid forming material, the liquid forming material may be cured to form a correct shape of the cross-section layer. Then, as the moving platform moves along a Z-axis, the liquid forming material may be cured layer-by-layer and stacked to form a 3D object on the moving platform.

However, in an actual manufacturing process, the liquid forming material may have absorptivities corresponding to different light wavelengths due to its material property, namely, the light absorptivity of the liquid forming material may be changed along with different light wavelengths, so that the liquid forming material cannot achieve a complete curing state through the light of a single wavelength. Regarding the 3D printing apparatus, besides it adopts a curing light source of a single wavelength, and the curing light source cannot cover the light with all of wavelengths adapted to cure the liquid forming material, let alone the liquid forming material has the absorptivities corresponding to different light wavelengths, so that the 3D object is not easy to achieve a complete curing state, which decreases the 3D printing quality.

Therefore, how to provide a perfect curing process during the manufacturing process of the 3D object to ameliorate the above situation has become a problem that needs to be solved by technicians skilled in the art.

### SUMMARY

The disclosure is directed to a three-dimensional (3D) printing method, by which a 3D object achieves a complete curing state through different curing means.

An embodiment of the disclosure provides a 3D printing method including: obtaining a wavelength-absorptivity relationship of a liquid forming material, where the wavelength-absorptivity relationship includes absorptivity peaks of at least two corresponding wavelengths; forming a 3D object by using a 3D printing apparatus, where the 3D printing apparatus provides a first light to cure the liquid forming material layer-by-layer and stacks the same to form the 3D object, and a wavelength of the first light is one of the at least two corresponding wavelengths; and providing a second light by a post curing device to irradiate the 3D object, where the second light comprises the at least two corresponding wavelengths.

Based on the above description, according to the wavelength-absorptivity relationship of the liquid forming material, a light characteristic required for curing the 3D object is determined, so as to adjust and match the light of the required characteristic. Namely, after obtaining the wavelength-absorptivity relationship of the liquid forming material, the number of the absorptivity peaks of the corresponding wavelengths and the corresponding wavelengths are learned, so that the first light is used for implementing a forming process of the 3D object, where the wavelength of the first light is one of the corresponding wavelengths. Then, the formed 3D object is placed into the post curing device, and the second light provided by the post curing device is used for performing a post curing process to the 3D object, where the second light includes the corresponding wavelengths of the at least two peaks.

In other words, during an execution process of the forming art, the first light is only required to contain the light wavelength adapted for forming a 3D object, and in the post curing process, the post curing device may provide the light with all of the corresponding absorptivity wavelengths of the liquid forming material, so as to completely cure the 3D object. In this way, the problem that the absorptivity of the liquid forming material is different along with different light wavelengths is effectively resolved, such that the 3D object may absorb all of the light wavebands adapted for curing.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1 is a flowchart illustrating a three-dimensional (3D) printing method according to an embodiment of the disclosure.
FIG. 2 is a schematic diagram of a wavelength-absorptivity relationship of a liquid forming material according to an embodiment of the disclosure.
FIG. 3A and FIG. 3B are schematic diagrams of a 3D printing apparatus according to an embodiment of the disclosure.
FIG. 3C is illustrates an electrical connection relationship of a part of components of the 3D printing apparatus.
FIG. 3D is a schematic diagram of a wavelength-intensity relationship of a light-emitting element.
FIG. 4A and FIG. 4B are schematic diagrams of a post curing device according to an embodiment of the disclosure.
FIG. 4C illustrates an electrical connection relationship of the post curing device.
FIG. 5 is a schematic diagram of a post curing device according to another embodiment of the disclosure.

### DESCRIPTION OF EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

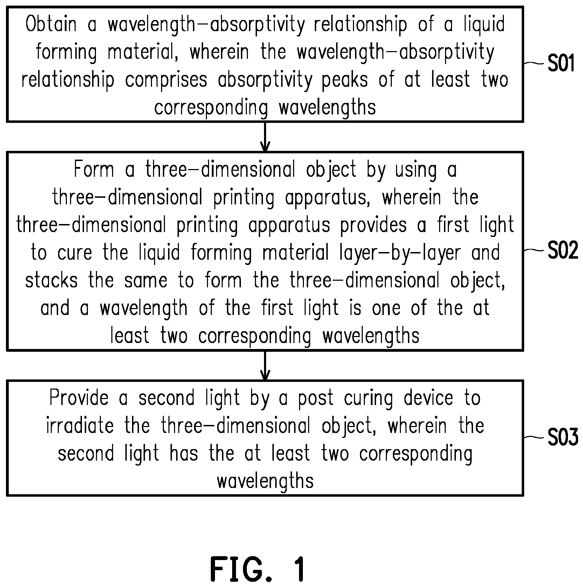

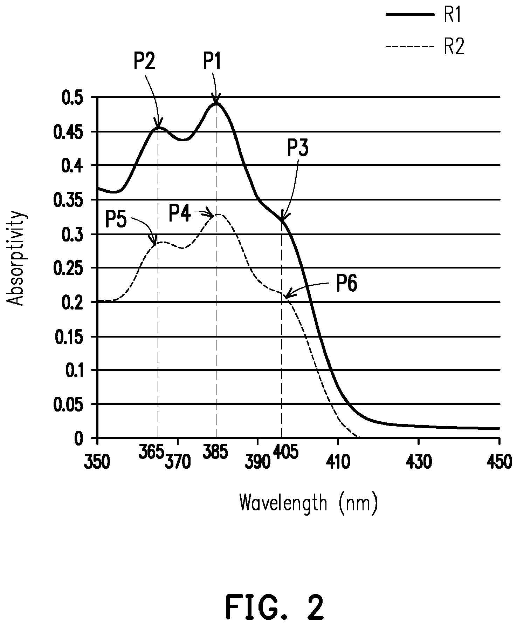

FIG. 1 is a flowchart illustrating a three-dimensional (3D) printing method according to an embodiment of the disclosure. FIG. 2 is a schematic diagram of a wavelength-absorptivity relationship of a liquid forming material according to an embodiment of the disclosure. Referring to FIG. 1 and FIG. 2, in the 3D printing process, due to a material property of the liquid forming material, absorptivity thereof on curing light is different along with different wavelengths, in order resolve the problem of the prior art to make the 3D object to achieve a complete curing state, in the 3D printing method of the disclosure, in step S01, a wavelength-absorptivity relationship of a liquid forming material is obtained firstly, i.e. the information shown in FIG. 2 is obtained. Referring to a liquid forming material R1 first, according to the relationship diagram, it is known that the liquid forming material R1 has absorptivity peaks P1, P2, P3 corresponding to three wavelengths, where P1>P2>P3, which represents that the liquid forming material R1 has a larger absorptivity for the light with a wavelength of 385 nm, and sequentially for the light with a wavelength of 365 nm and the light with a wavelength of 405 nm. Namely, the curing light of the above three wavelengths may respectively and successfully cure the liquid forming material, and the difference there between lies in intensities and irradiation time of the curing light.

It should be noted that according to FIG. 2, it is known that the peak P3 is relatively not obvious (low absorptivity) relative to the peaks P1, P2, so that in other embodiment that is not shown, one of the peaks P1, P2 may be selected for the curing light, which is described in detail later.

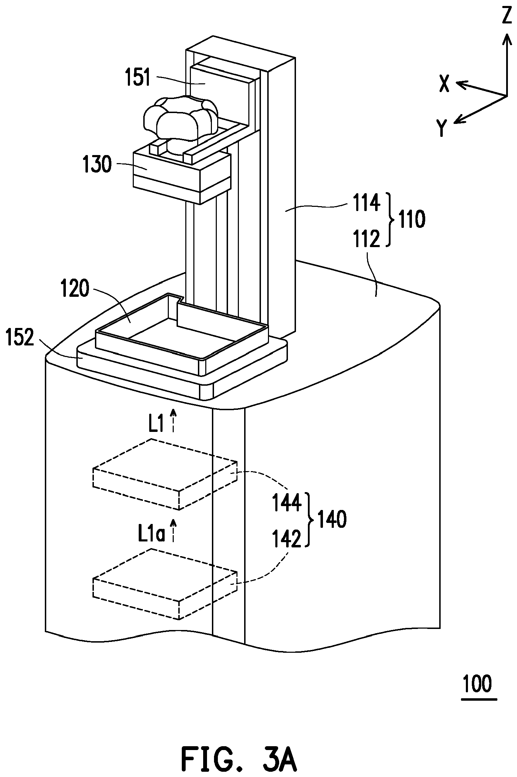

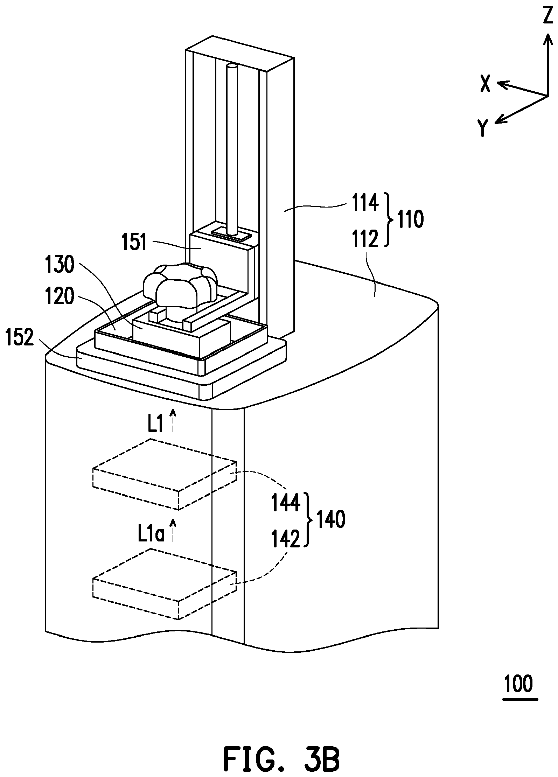

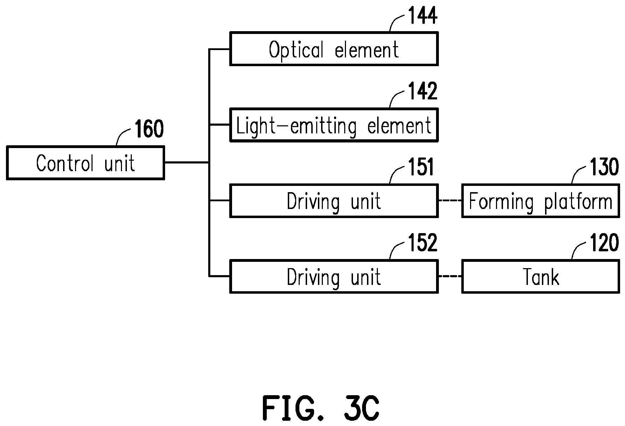

FIG. 3A and FIG. 3B are schematic diagrams of a 3D printing apparatus according to an embodiment of the disclosure. FIG. 3C illustrates an electrical connection relationship of a part of components of the 3D printing apparatus, where dotted lines represent non-electrical connection relationship. Referring to FIG. 3A to FIG. 3C and compared to FIG. 1 and FIG. 2, the 3D printing apparatus 100 is, for example, a stereolithography apparatus (SLA), which includes a body 110, a tank 120, a forming platform 130, a curing light source 140, driving units 151 and 152, and a control unit 160. The body 110 includes a base 112 and a gantry 114 disposed on the base 112. The tank 120 is used for containing a liquid forming material (for example, the aforementioned liquid forming material R1). The curing light source 140 is disposed in the base 112 and located under the tank 120, and the curing light source 140 includes a light-emitting element 142 and an optical element 144. The control unit 160 is electrically connected to the light-emitting element 142 of the curing light source 140 to generate light L1a, and the light L1a passes through the optical element 144 to form a first light L1, and the control unit 160 may also drive the optical element 144, for example, to adjust a focal length of the light or an irradiation, scanning position of the light to cure the liquid forming material R1 of a specific position.

Moreover, the forming platform 130 is movably dispose on the gantry 115 through the driving unit 151, and the control unit 160 is electrically connected to the driving unit 151 to drive the forming platform 130 to move along a Z-axis, so that the forming platform 130 may be moved into and moved out of the tank 120.

When the forming platform 130 is moved into the tank 120 to contact the liquid forming material, the curing light source 140 provides the first light L1 to penetrate through the bottom of the transparent tank 120 to cure the liquid forming material R1 layer-by-layer to form on an a forming surface of the forming platform 130. As the forming platform 130 is gradually moved away from the tank 120, solid state forming layers formed by curing the liquid forming material R1 layer-by-layer are gradually stacked on the forming platform 130 until printing of the 3D object is completed. It should be noted that only the components and 3D printing processes related to the disclosure are introduced, and the other undisclosed parts may be learned from the existing stereolithography technique, and details thereof are not repeated.

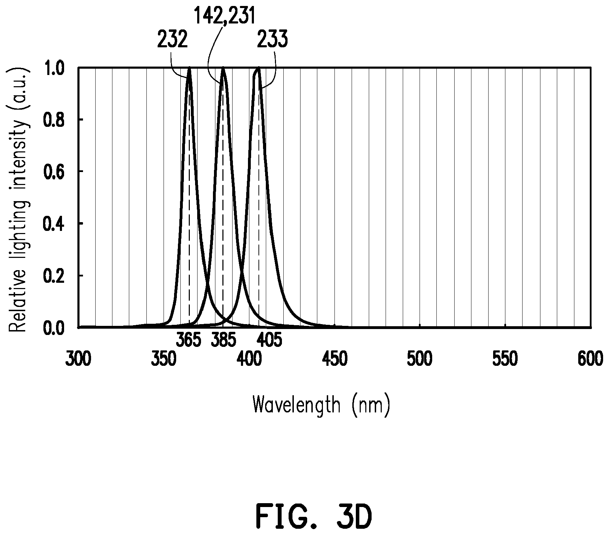

FIG. 3D is a schematic diagram of a wavelength-intensity relationship of a light-emitting element. Referring to FIG. 3D, in the embodiment, the light-emitting device 142 of the curing light source 140 is, for example, a light-emitting diode (LED), due to a monochromatic light characteristic of the LED, three different peaks shown in FIG. 3D respectively represent light wavelengths produced by three different light-emitting elements, and meanwhile correspond to the wavelength-absorptivity relationship of the liquid forming material R1 shown in FIG. 2. It should be noted that regarding the light with lower wavelength, besides that the optical element with a higher degree of precision is required for handling, it is also liable to damage the object passing by. Namely, in the 3D printing apparatus 100 shown in FIG. 3A, FIG. 3B, the optical element 144 and the tank 120 are all located on an optical path of the light L1a produced by the light-emitting element 142 and the first light L1, and once the light-emitting element 142 with lower wavelength is adopted, not only the manufacturing cost of the optical element 144 is increased, a service life of the 3D printing apparatus is decreased due to that the optical element 144 and the tank 120 are easy to be damaged, which increases maintenance cost.

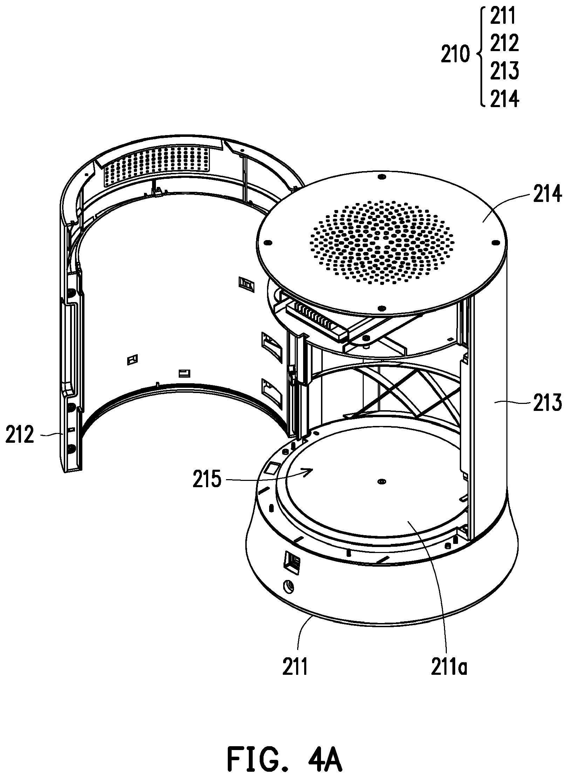

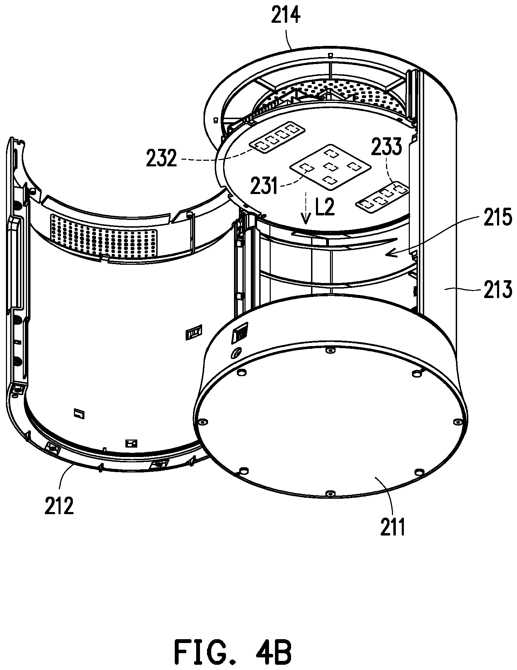

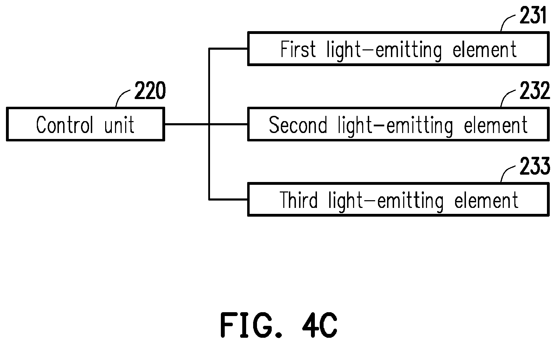

Therefore, besides the 3D printing apparatus 100, the disclosure further provides a post curing device 200, and FIG. 4A and FIG. 4B are schematic diagrams of a post curing device according to an embodiment of the disclosure. FIG. 4C illustrates an electrical connection relationship of the post curing device. Referring to FIG. 4A to FIG. 4C, the post curing device 200 includes a body 210, a plurality of light-emitting elements and a control unit 220. The body 210 is composed of a bottom portion 211, side portions 212 and 213 and a top portion 214 to form a chamber 215 for accommodating the 3D object, where the side portion 212 adapted to be opened and closed relative to the side portion 213 is assembled to the side portion 213, such that a user is adapted to open and close the chamber 215. As shown in FIG. 4B and FIG. 4C, a plurality of the light-emitting elements are controlled by the control unit 220 to provide a second light L2 to the 3D object in the chamber 215 to perform a post curing processing. The light-emitting elements include a first light-emitting element 231, a second light-emitting element 232 and a third light-emitting element 233, which are respectively disposed on the top portion 214 of the body 210 and are electrically connected to the control unit 220, such that the control unit 220 is adapted to turn on/off the light-emitting elements, and adjust an output power (which may be regarded as an irradiation strength of the second light L2) and irradiation time of the light-emitting elements. The first light-emitting element 231, the second light-emitting element 232 and the third light-emitting element 233 may generate light of different wavelengths, as shown in FIG. 3D, where the first light-emitting element 231 is used for generating light with a wavelength of 385 nm, the second light-emitting element 232 is used for generating light with a wavelength of 365 nm, and the third light-emitting element 233 is used for generating light with a wavelength of 405 nm, i.e. the light-emitting elements are disposed at different regions on the top of the chamber 215 according to wavelengths thereof, such that the second light L2 may contain at least one of the lights of different wavelengths. It should be noted that although the lights of three different wavebands are shown, the number of wavebands is not limited by the disclosure.

Moreover, the post curing device 200 of the embodiment further includes a rotation base 211a disposed on the bottom 211 of the body 210 and located at the bottom of the chamber 215, and the formed 3D object is adapted to be placed on the rotation base 211a, such that in the post curing process, the 3D object may be driven by the rotation base 211a to rotate in the chamber 215, so as to improve an irradiated surface area of the 3D object irradiated by the second light L2.

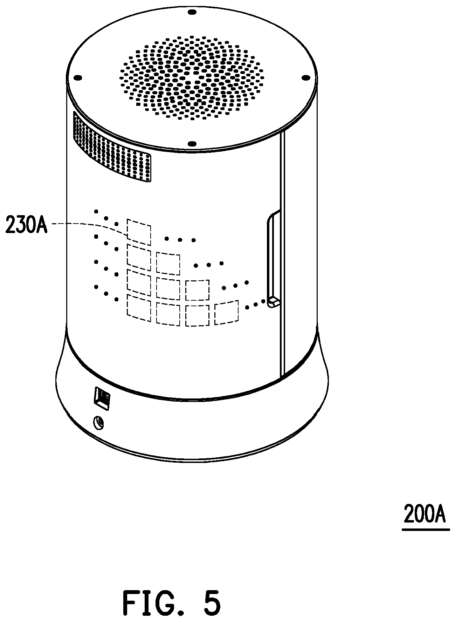

The configuration method of the light-emitting elements in the post curing device is not limited by the disclosure. FIG. 5 is a schematic diagram of a post curing device according to another embodiment of the disclosure. Different to the aforementioned embodiment, in the post curing device 200A of the embodiment, the light-emitting elements 230A are disposed in different regions around the chamber according to the wavelengths thereof. In this way, after the 3D object is placed into the chamber, the 3D object may be irradiated by the light produced by the surrounded light-emitting elements 230A.

Referring to FIG. 1 and compared with FIG. 2 and FIG. 3D, as described above, in order to avoid the problem caused by adopting the light with lower wavelength in the 3D printing process, the post curing device 200 used in collaboration with the 3D printing apparatus 100 to implement the 3D printing method shown in FIG. 1. It should be noted that selection of the light waveband for the 3D printing method is only an example, and those skilled in the art may deduce other related embodiments according to the described selection logic.

As described in the step S01, the wavelength-absorptivity relationship of the liquid forming material R1 is first obtained, and as shown in FIG. 2, the wavelength-absorptivity relationship includes absorptivity peaks of at least two corresponding wavelengths, and in the embodiment, the absorptivity peaks P1, P2 and P3 of three corresponding wavelengths are taken as an example for description. Then, in step S02, the 3D printing apparatus 100 is adopted to form a 3D object, where the 3D printing apparatus 100 provides the first light L1 to cure the liquid forming material R1 layer-by-layer and stacks the same to form the 3D object, and a wavelength of the first light L1 is one of the at least two corresponding wavelengths, and in the embodiment, the higher one of the absorptivity peaks P1, P2 and P3 is selected, i.e. the light with the wavelength (385 nm) corresponding to the absorptivity peak P1 is taken as the light-emitting element 142 required for forming the 3D object, as shown in FIG. 3D.

In another embodiment that is not shown, one of the absorptivity peaks P1, P2 and P3 with a longer wavelength may be selected, i.e. the light with the wavelength (405 nm) corresponding to the absorptivity peak P3 is taken as the light-emitting element 142 of the 3D printing apparatus 100.

As described above, compared to the absorptivity peaks P1 and P2, the absorptivity peak P3 is relatively low and not obvious, so that in another embodiment that is not shown, the absorptivity peaks P1 and P2 are taken as a selection reference, and similarly, the light with the wavelength corresponding to the absorptivity peak P1 is still selected as the curing light source 140 required for the 3D printing process, and meanwhile the longer corresponding wavelength is selected.

According to the above description, it is known that in the 3D printing method of the disclosure, after the wavelength-absorptivity relationship of the liquid forming material R1 is learned, the light with the wavelength corresponding to the higher absorptivity peak is selected, or the longer corresponding wavelength is selected (or the wavelength satisfying both of the above conditions) as the curing light source 140 required by the 3D printing apparatus 100 for forming the 3D object, so as to avoid the situation that the light with shorter wavelength damages the optical element 144 and the tank 120 to improve the produce service life and reduce the maintenance cost. Meanwhile, such method also avoids using the optical element with higher degree of precision, so as to reduce the manufacturing cost and improve the process efficiency of 3D printing.

Then, in step S03, the formed 3D object is moved into the chamber 215 of the post curing device 200, and the post curing device 200 provides the second light L2 to irradiate the 3D object, where the second light L2 comprises the at least two corresponding wavelengths, and in the embodiment, the wavelengths of the second light L2 includes the corresponding wavelengths of the three absorptivity peaks P1, P2 and P3 of the aforementioned liquid forming material R1.

In detail, by comparing the 3D printing apparatus 100 and the post curing device 200, it is known that the 3D printing apparatus 100 is required to use the optical element to control the first light L1 to irradiate a specific position of the liquid forming material R1 in the tank 120 in order to complete the 3D printing process of the 3D object. Thereafter, the post curing device 200 is used for further curing the formed 3D object, so that the light-emitting element is unnecessary to add the optical element 144 for guiding light or focusing light, namely, during the process that the light-emitting element produces light to irradiate the 3D object, the light does not pass through any intermediate object, so that the problem of object damage is avoided. In this way, the post curing device 200 may be configured with the first light-emitting element 231, the second light-emitting element 232 and the third light-emitting element 233 with different wavelengths, such that the wavelength of the second light L2 may include the corresponding wavelengths of all of the peaks (PI, P2 and P3) in the wavelength-absorptivity relationship of the liquid forming material R1, as shown in FIG. 3D. In this way, the 3D object moved into the chamber 215 may receive the second light L2 of multiple wavebands, so as to achieve a complete curing state.

It should be noted that in order to facilitate the user's operation, the 3D printing method of the embedment further includes: storing data of the wavelength (or a related parameter thereof) of the corresponding first light L1 to the 3D printing apparatus 100 for the different liquid forming materials; and storing data of the at least two corresponding wavelengths (or related parameters thereof) corresponding to the second light L2 to the post curing device 200. Further, in the embodiment, intensities or an irradiation time of the at least two corresponding wavelengths of the second light L2 are stored to the post curing device 200. In this way, when the user again performs the 3D printing, the related data or parameters such as the required wavelengths, intensities, irradiation time, etc., may be directly obtained from the 3D printing apparatus 100 and the post curing device 200, so as to simplify the operation procedure of the user to improve the 3D printing efficiency.

Referring to FIG. 2 and FIG. 3D, a different embodiment is provided to describe the use of light of the 3D printing method of the disclosure.

In an embodiment, the user may first use the light with the corresponding wavelength 405 nm of the absorptivity peak P3 as the first light L1 required by the 3D printing apparatus 100 for forming the 3D object, and then the post curing device 200 performs the post curing process to the formed 3D object through the second light L2 including the corresponding wavelengths 385 nm, 365 nm and 405 nm of the absorptivity peaks P1, P2 and P3, so that in the embodiment, the wavelength of the first light L1 is greater than or equal to the wavelength of the second light L2.

In an embodiment, the user may change output powers of the light-emitting elements to adjust the intensities of the first light L1 and the second light L2. For example, the user may use the 3D printing apparatus 100 to perform the 3D printing process through the first light L1 with a relatively low intensity, and then use the post curing device 200 to finish the final curing of the 3D object through the second light L2 with a relatively high intensity.

Referring to FIG. 2, when the user selects another liquid forming material R2, the form of light adopted by the 3D printing process and the post curing process is still determined according to the wavelength-absorptivity relationship of the liquid forming material R2. According to FIG. 2, it is known that the light intensity is proportional to the absorptivity of the liquid forming material. For example, when the post curing process is carried on, the intensity of the second light L2 may be determined according to absorptivity peaks P4, P5, P6 of the liquid forming material R2, i.e. to determine the output powers of the light-emitting elements, for example, according to the absorptivities corresponding to the absorptivity peaks P4, P5, P6, the output power of the first light-emitting element 231 is set to 100%, the output power of the second light-emitting element 232 is set to 90%, and the output power of the third light-emitting element 233 is set to 50%.

Moreover, comparing the liquid forming materials R1 and R2, the irradiation time of the second light L2 is inversely proportional to the absorptivities of the liquid forming materials R1 and R2, namely, the absorptivity of the liquid forming material R2 is substantially a half of the absorptivity of the liquid forming material R1, so that the irradiation time required by the liquid forming material R2 is twice as much as that of the liquid forming material.

In summary, in the embodiments of the disclosure, the 3D printing method determines a light characteristic required for curing the 3D object according to the wavelength-absorptivity relationship of the liquid forming material, so as to adjust and match the light of the required characteristic. Namely, after obtaining the wavelength-absorptivity relationship of the liquid forming material, the number of the absorptivity peaks of the corresponding wavelengths and the corresponding wavelengths are learned, so that the first light is used for implementing a forming process of the 3D object, where the wavelength of the first light is one of the corresponding wavelengths. Then, the formed 3D object is placed into the post curing device, and the second light provided by the post curing device is used for performing a post curing process to the 3D object, where the second light includes the corresponding wavelengths of the at least two peaks.

In other words, in the 3D printing method of the disclosure, it is avoided to only use the light of a single wavelength to form the 3D object, i.e. considering a manufacturing efficiency of the 3D printing process, the 3D printing apparatus is used in collaboration with the post curing device to adjust the curing means of the 3D object, where the light of the single wavelength is first adopted to carry on the 3D object printing process, and then the light of multiple wavelengths is adopted to carry on the post curing process, so that the 3D object may achieve a complete curing state to improve the quality of the 3D object.

## Claims

1. A three-dimensional printing method, comprising:
obtaining a wavelength-absorptivity relationship of a liquid forming material (R1, R2), wherein the wavelength-absorptivity relationship comprises absorptivity peaks (PI, P2, P3, P4, P5, P6) of at least two corresponding wavelengths;
forming a three-dimensional object by using a three-dimensional printing apparatus (100), wherein the three-dimensional printing apparatus (100) provides a first light (L1) to cure the liquid forming material (R1, R2) layer-by-layer and stacks the same to form the three-dimensional object, and a wavelength of the first light (L1) is one of the at least two corresponding wavelengths; and
providing a second light (L2) by a post curing device (200, 200A) to irradiate the three-dimensional object, wherein the second light (L2) comprises the at least two corresponding wavelengths.

2. The three-dimensional printing method as claimed in claim 1, wherein the wavelength of the first light (L1) corresponds to a higher one of the absorptivity peaks (P1, P2, P3, P4, P5, P6).

3. The three-dimensional printing method as claimed in claim 1, wherein the wavelength of the first light (L1) is a longer one of the at least two corresponding wavelengths.

4. The three-dimensional printing method as claimed in claim 1, wherein the wavelength of the first light (L1) is greater than or equal to the at least two corresponding wavelengths of the second light.

5. The three-dimensional printing method as claimed in claim 1, wherein an intensity of the first light (L1) is smaller than intensities of the at least two corresponding wavelengths of the second light (L2).

6. The three-dimensional printing method as claimed in claim 1, wherein intensities of the at least two corresponding wavelengths of the second light (L2) are proportional to the absorptivities of the liquid forming material (R1, R2).

7. The three-dimensional printing method as claimed in claim 1, wherein an irradiation time of the at least two corresponding wavelengths of the second light (L2) is inversely proportional to the absorptivities of the liquid forming material.

8. The three-dimensional printing method as claimed in claim 1, wherein the post curing device (200, 200A) comprises:
a body (210), having a chamber (215);
a control unit (220) and a plurality of light-emitting elements (231, 232, 233, 230A), respectively disposed in the body (210), wherein the light-emitting elements (231, 232, 233, 230A) are electrically connected to the control unit (220), and the control unit (220) controls and adjusts an irradiation time and the intensity of the second light (L2), the three-dimensional objected is adapted to be placed in the chamber (215), and the control unit (220) drives the light-emitting elements (231, 232, 233, 230A) to provide the second light (L2) to irradiate the three-dimensional object in the chamber (215).

9. The three-dimensional printing method as claimed in claim 8, wherein the light-emitting elements (231, 232, 233) are configured at different regions on top (214) of the chamber (215) according to light wavelengths thereof.

10. The three-dimensional printing method as claimed in claim 8, wherein the light-emitting elements (230A) are configured at different regions around the chamber (215) according to light wavelengths thereof.

11. The three-dimensional printing method as claimed in claim 8, wherein the post curing (200, 200A) device further comprises a rotation base (211a) disposed in the body (210) and located at a bottom (211) of the chamber (215), and the three-dimensional object is adapted to be placed on the rotation base (211a).

12. The three-dimensional printing method as claimed in claim 1, further comprising:
storing the wavelength of the corresponding first light (L1) to the three-dimensional apparatus (100) for the different liquid forming material (R1, R2); and
storing the at least two corresponding wavelengths of the corresponding second light (L2) to the post curing device (200, 200A).

13. The three-dimensional printing method as claimed in claim 12, further comprising:
storing intensities or an irradiation time of the at least two corresponding wavelengths of the second light (L2) to the post curing device (200, 200A).
